# EUROPEAN PATENT APPLICATION

(11) **EP 0 971 306 A1**
(43) Date of publication of application: **12.01.2000**
(21) Application number: 98122506.3
(22) Date of filing: 27.11.1998
(51) Int. Cl.: G06K 7/08

(54) **A universal coil for programming tag coils of various configurations**

(30) Priority: 10.07.1998 US 113992
(71) Applicant: MICROCHIP TECHNOLOGY INC., Chandler, AZ 85224-6199 (US)
(72) Inventor: Youbok, Lee, Phoenix, Arizona 85044 (US)
(74) Representative: Frohwitter, Bernhard, Dipl.-Ing.

(57) **Abstract**

A universal programmer coil for programing tag coils of various configurations. The universal programmer coil has at least two programming coils coupled together for generating a signal which magnetically couples the universal programmer coil to tag coils of various configurations for programming the tag coils.

## Description

### BACKGROUND OF THE INVENTION

### Field of the Invention:

This invention relates generally to programming coils and, more specifically, to a universal programming coil which may be used to program a wide range of RFID tags with different configurations and sizes thereby eliminating the necessity to use a specific programming coil for a specific tag.

### Description of the Prior Art:

In order to program a Radio Frequency Identification (RFID) device contactlessly, the RFID device will be placed near a programing coil of a programming unit. When the programming coil and tag coil are within a close distance, the signal generated by the programmer coil is induced at the RFID tag coil. This is also true when the signal generated by the RFID tag coil is induced at the programmer coil. This is called inductive coupling or magnetic coupling effect. This magnetic coupling effect of the coils is utilized to program the RFID device contactlessly. A unique sequence of programming signals may now be wirelessly transferred to the RFID device from the programmer coil.

While current programming coils do work, there are several problems associated with them. First, the coupling factor between the programming coil and the tag coil varies with different tag coils. Furthermore, different tag coils require different signal levels. Thus, current programming coils are designed to program a corresponding tag coil of a similar shape and dimension. If a tag coil is smaller, larger, or is of a different configuration/shape than the programming coil, the programming coil may not be able to generate a strong enough signal to magnetically couple itself to the tag coil in order to program the corresponding tag coil.

Therefore, a need existed to provide an improved programming coil. The improved programming coil would be a universal programming coil. The universal programming coil will be able to program tag coils of different sizes and configurations thereby eliminating the necessity of using a specific individual programming coil for a specific tag coil.

### SUMMARY OF THE INVENTION

In accordance with one embodiment of the present invention, it is an object of the present invention to provide an improved programming coil.

It is another object of the present invention to provide an improved programming coil which is a universal programming coil

It is still another object of the present invention to provide a universal programming coil that is able to program tag coils of different sizes and configurations thereby eliminating the necessity of using a specific individual programming coil for a specific tag coil.

### BRIEF DESCRIPTION OF THE PREFERRED EMBODIMENTS

In accordance with one embodiment of the present invention, a universal programmer coil for programming tag coils of various configurations is disclosed. The universal programmer coil has at least two programming coils coupled together for generating a signal which couples the universal programmer coil to tag coils of various configurations for programming the tag coils of various configurations.

In accordance with another embodiment of the present invention, a universal programmer coil for programming RFID devices with various configurations of tag coils is disclosed. The universal programmer coil has a plurality of programming coils coupled together for generating a signal which couples the universal programmer coil to tag coils of various configurations for programming tag coils of various configurations. The inner most programming coil of the plurality of programming coils is a core antenna which is able to generate a strong magnetic field along an axis of the core antenna. The core antenna has a magnetic ferrite core. Wiring is wrapped around the magnetic core a plurality of times in order to generate a strong magnetic field along the axis of the core antenna when a signal is driven through the winding.

In accordance with another embodiment of the present invention, a universal programmer coil for programming RFID devices with various configurations of tag coils is disclosed. The universal programmer coil has a first programming coil for generating a signal which couples the universal programmer coil to tag coils of a first configuration for programming tag coils of a first configuration. A second programming coil is coupled in series to the first programming coil for generating a signal which couples the universal programmer coil to tag coils of a second configuration for programming tag coils of a second configuration.

In accordance with another embodiment of the present invention, a universal programmer coil for programming RFID devices with various configurations of tag coils is disclosed. The universal programmer coil has a wiring wound in a spiral configuration having a plurality of turns. The winding is used for generating a signal which couples the universal programmer coil to tag coils of various configurations for programming tag coils of various configurations.

The foregoing and other objects, features, and advantages of the invention will be apparent from the following, more particular, description of the preferred embodiments of the invention, as illustrated in the accompanying drawings.

### BRIEF DESCRIPTION OF THE DRAWINGS

Figure 1 is a simplified functional block diagram depicting the programming configuration between a programmer coil and a tag coil of an RFID device.
Figure 2A is an elevated perspective view of one embodiment of the universal programmer coil of the present invention.
Figure 2B is an elevated perspective view of the magnetic core antenna used in the universal programmer coil of the present invention.
Figure 3 is an elevated perspective view of a second embodiment of the universal programmer coil of the present invention.
Figure 4 is an elevated perspective view of a third embodiment of the universal programmer coil of the present invention.
Figure 5 is an elevated perspective view of a fourth embodiment of the universal programmer coil of the present invention.
Figure 6 is an elevated perspective view of a fifth embodiment of the universal programmer coil of the present invention.

### DETAILED DESCRIPTION OF THE PREFERRED EMBODIMENTS

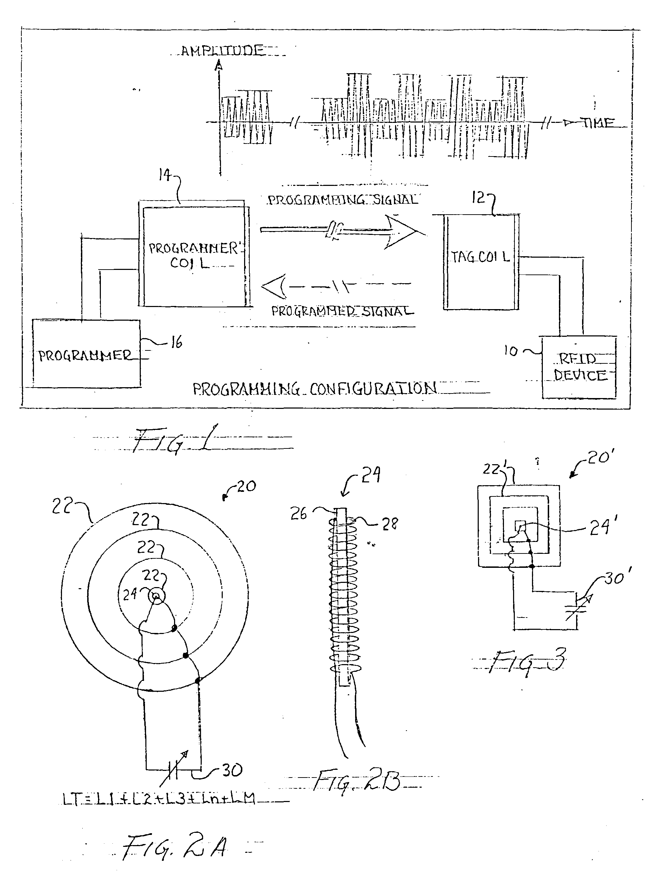

Referring to Figure 1, in order to program a Radio Frequency Identification (RFID) device 10, a tag coil 12 of the RFID device 10 is typically placed near a programming coil 14 of a programming unit 16. The programming unit 16 will send a signal to the programming coil 14. The programming coil 14 will generate a magnetic field which will magnetically couple the programming coil 14 to the tag coil 12 of the RFID device 10. When the programming coil 14 and the tag coil 12 are magnetically coupled together, a unique sequence of programming signals are transmitted by the programming coil 12 and received by the tag coil 12. The programming signal is used to program the RFID device 10.

As stated above, the problem with current programmer coils 14 are that the programmer coils 14 are designed to program a corresponding tag coil of a similar shape and dimension. If a tag coil 12 is smaller, larger, or is of a different configuration/shape, than the programmer coil 14 may not be able to generate a strong enough magnetic field to magnetically coupled the programmer coil 14 to the tag coil 12 in order to program the tag coil 12.

Referring to Figures 2A, one embodiment of the universal programmer coil 20 of the present invention is shown. The universal programmer coil 20 uses a plurality of individual programming coils 22. Each programming coil 22 is coupled in series to a directly preceding and directly succeeding programming coil 22.

The inner most programming coil of the universal programmer coil 20 is a core antenna 24. The core antenna 24 is able to generate a strong magnetic flux along an axis of the core antenna 24 when a signal is driven through the universal programmer coil 20. As may be seen more clearly in Figure 2B, the core antenna 24 has a magnetic core 26. A wiring 28 is wound around the magnetic core 26 a plurality of times. This enables the core antenna 26 to generate a strong magnetic flux along an axis of the core antenna 26 when a signal is driven through the universal programmer coil 20. In the preferred embodiment of the present invention, the magnetic core 26 is a ferrite magnetic core.

In the embodiment depicted in Figure 2A, each of the programming coils 22 are circular in shape. Each programming coil 22 is centered around a common centerpoint which is the core antenna 24. The universal programmer coil 20 is designed such that each successive programming coil 22 after the core antenna 24 has an increasing radius. Coupled in series to the last programming coil 22 is an adjustable capacitor 30. The adjustable capacitor 30 is used to allow one to adjust/tune the signal from the universal programmer coil 20.

In order to program the RFID device 10 (Figure 1), the tag coil 12 will be placed near the universal programmer coil 20. A current will be sent from the programmer unit 16 (Figure 1) and will run through the universal programmer coil 20. The current will cause a strong magnetic flux to be generated by the universal programmer coil 20. The magnetic flux that is generated will magnetically couple the tag coil 12 to the universal programmer coil 20. With the tag coil 12 and the universal programmer coil magnetically coupled together, energy may be transferred from the universal programmer coil 20 to the tag coil 12 in order to program the RFID device 10.

Referring now to Figure 3 wherein like numerals and symbols represent like elements with the exception of the use of "'" to indicate another embodiment, a second embodiment of the universal programmer coil 20' is shown. This embodiment is the same as the embodiment depicted in Figure 2A. The universal programmer coil 20' has a plurality of programing coils 22' each coupled together in series to a directly preceding and directly succeeding programming coil 22'. The inner most programing coil is a core antenna 24' which is able to generate a strong magnetic flux along an axis of the core antenna 24' when a signal is driven through the universal programmer coil 20'. Coupled in series to the last programming coil 22' is an adjustable capacitor 30'. The adjustable capacitor 30' is used to allow one to adjust/tune the signal from the universal programmer coil 20'. The only difference between the embodiment depicted in Figure 2A and the embodiment depicted in Figure 3 is that the programming coils 22' in Figure 3 are shaped in the configuration of a polygon.

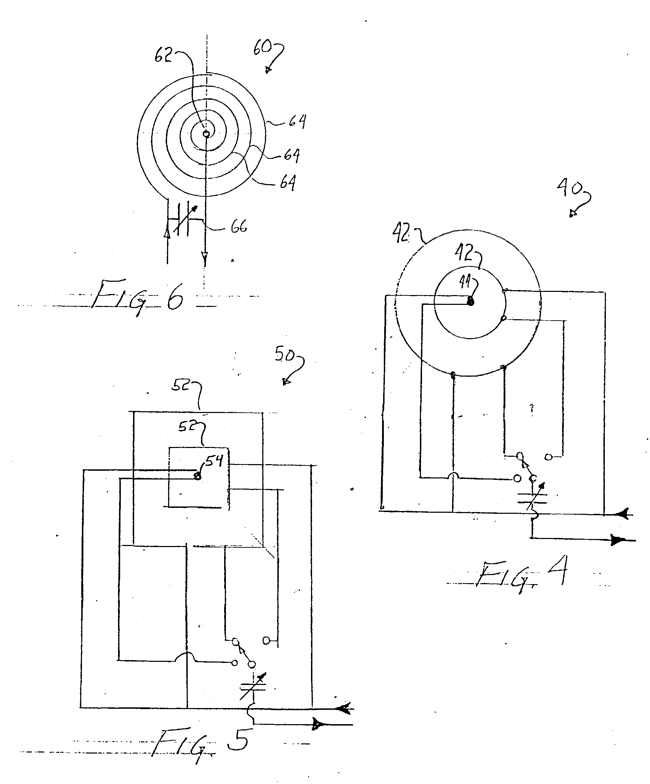

Referring to Figures 4, a third embodiment of the present invention is shown. In this embodiment, the universal programmer coils 40 has a plurality of programming coils 42. Each programming coil 42 is coupled to a directly preceding and directly succeeding programming coil 42 in parallel. The inner most programming coil is a core antenna 44 which is able to generate a strong magnetic flux along an axis of the core antenna 44 when a signal is driven through the universal programmer coil 40. The core antenna 42 is the same as that shown and described in Figure 2B. In this embodiment, each programming coil 42 is circular in shape. Each programing coil 42 is centered around a common centerpoint which is the core antenna 44. The universal programmer coil 40 is designed such that each successive programming coil 42 after the core antenna 44 has an increasing radius. An adjustable capacitor 46 is coupled to one of the programming coils 42 or to the core antenna 44 via a switching circuit 48. The adjustable capacitor 46 is used to allow one to adjust/tune the signal from the universal programmer coil 40.

Referring to Figures 5, a fourth embodiment of the present invention is shown. In this embodiment, the universal programmer coils 50 also has a plurality of programming coils 52. Each programming coil 52 is coupled to a directly preceding and directly succeeding programming coil 52 in parallel. The inner most programming coil is a core antenna 54 which is able to generate a strong magnetic flux along an axis of the core antenna 54 when a signal is driven through the universal programmer coil 50. The core antenna 52 is the same as that shown and described in Figure 2B. In this embodiment, each programming coil 52 is in the shape of a polygon. Each programming coil 52 is centered around a common centerpoint which is the core antenna 54. The universal programmer coil 50 is designed such that each successive programming coil 52 after the core antenna 54 has an increasing perimeter. An adjustable capacitor 56 is coupled to one of the programming coils 52 or to the core antenna 54 via a switching circuit 58. The adjustable capacitor 56 is used to allow one to adjust/tune the signal from the universal programmer coil 50.

Referring to Figure 6, a fifth embodiment of the present invention is shown. In this embodiment, the universal programmer 60 has a core antenna 62. The core antenna 62 is the same as that shown in Figure 2B. The core antenna 62 has a winding which is wound around a magnetic ferrite core a plurality of times (see Figure 2). After the winding is wound around the core antenna 62, the winding is wound in a spiral configuration having a plurality of turns 64. Each successive turn 64 will have an increasing radius when measured from the core antenna 62. The plurality of turns is used for generating a signal which magnetically couples the universal programmer coil 60 to tag coils 12 (Figure 1) of various configurations for programming the tag coils 12. Like previous embodiments, an adjustable capacitor 66 may be coupled to the winding. The adjustable capacitor 66 is used to allow one to adjust/tune the signal from the universal programmer coil 60.

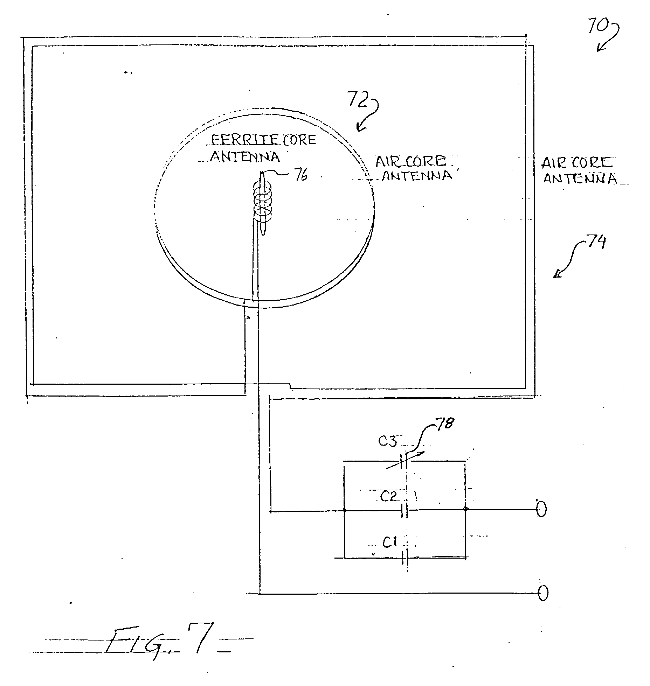

Referring now to Figure 7, another embodiment of the present invention is shown. In this embodiment, the universal programmer coil 70 has a first programming coil 72, a second programming coil 74, and a core antenna 76. The first programming coil 72, the second programming coil 74, and the core antenna 76 are coupled together in series. The first programming coil 72 is designed to result in a good magnetic coupling with RFID devices having tag coils that have a similar size and shape to that of the first programming coil 72. The second programming coil 74 is designed to result in a good magnetic coupling with RFID devices having tag coils that have a similar size and shape to that of the second programming coil 74. The core antenna 76 is designed to result in a good magnetic coupling with RFID devices that have relatively small tag coils.

In the embodiment depicted in Figure 7, the first programming coil 72 is circular in shape and the second programming coil 74 is in the shape of a polygon. However, it should be noted that the first programming coil 72 and the second programming coil 74 may take on a plurality of different sizes and shapes. It should further be noted that the universal programmer coil 70 may be designed such that the first programming coil 72 may have a plurality of successive programming coil coupled together in series each having an increasing radius and that the second programming coil 74 may have a plurality of successive programming coil coupled together in series each having an increasing perimeter.

The first programming coils 72 is centered around a core antenna 76. The core antenna 76 is serially coupled to the first programming coil 72. The core antenna 76 is able to generate a strong magnetic flux along an axis of the core antenna 76 when a signal is driven through the universal programmer coil 70. The core antenna 76 is the same as that shown and described in Figure 2B.

Serially coupled to the second programming coil 74 is an adjustable capacitor 78. As in previous embodiments, the adjustable capacitor 78 is used to allow one to adjust/tune the signal from the universal programmer coil 70.

The core antenna of each embodiment of the universal programmer coil will produce a strong magnetic flux along the axis of the ferrite core. This strong and concentrated field provides enough programming energy to program RFID devices with even small tag coils. Each successive coil in each embodiment will allow the universal programmer coil to be magnetically coupled to a tag coil of a similar shape and size. Thus, the universal programmer coil will enable a programmer to program RFID devices with a plurality of different tag coil configurations. Therefore, the necessity of using a specific programmer coil for a specific RFID tag coil has been eliminated.

While the invention has been particularly shown and described with reference to preferred embodiments thereof, it will be understood by those skilled in the art that the foregoing and other changes in form, and details may be made therein without departing from the spirit and scope of the invention.

## Claims

1. A universal programmer coil for programming tag coils of various configurations comprising at least two programming coils coupled together for generating a signal which couples said universal programmer to said tag coils of various configurations for programming said tag coils of various configurations.

2. A universal programmer coil for programming tag coils of various configurations in accordance with Claim 1 wherein an inner most programming coil of said at least two programming coils is a core antenna which is able to generate a strong magnetic field along an axis of said core antenna.

3. A universal programmer coil for programming tag coils of various configurations in accordance with Claim 2 wherein said core antenna comprises:
a magnetic core; and
wiring wound around said magnetic core a plurality of times.

4. A universal programmer coil for programming tag coils of various configurations in accordance with Claim 3 wherein said magnetic core is a magnetic ferrite core.

5. A universal programmer coil for programing tag coils of various configurations in accordance with Claim 2 wherein each of said at least two programming coils are circular in shape and each successive programming coil has an increasing radius.

6. A universal programmer coil for programming tag coils of various configurations in accordance with Claim 2 wherein each of said at least two programming coils are polygon in shape and each successive programming coil has an increasing perimeter.

7. A universal programmer coil for programming tag coils of various configurations in accordance with Claim 2 wherein each of said at least two programming coils are coupled together in series.

8. A universal programmer coil for programming tag coils of various configurations in accordance with Claim 7 further comprising an adjustable capacitor coupled to said at least two programming coils which are coupled together in series for adjusting said signal which couples said universal programmer coil to said tag coils of various configurations for programming said tag coils of various configurations.

9. A universal programmer coil for programming tag coils of various configurations in accordance with Claim 2 wherein each of said at least two programming coils are coupled together in parallel.

10. A universal programmer coil for programming tag coils of various configurations in accordance with Claim 7 further comprising an adjustable capacitors wherein said adjustable capacitor is coupled to one of said at least two programming coils for adjusting said signal which couples said universal programmer coil to said tag coils of various configurations for programming said tag coils of various configurations.

11. A universal programmer coil for programming tag coils of various configurations in accordance with Claim 10 further comprising a switching circuit coupled to said adjustable capacitors for coupling one of said at least two programming coils to said adjustable capacitor.

12. A universal programmer coil for programming tag coils of various configurations comprises, in combination:
a plurality of programming coils coupled together for generating a signal which couples said universal programmer coil to said tag coils of various configurations for programming said tag coils of various configurations;
wherein an inner most programming coil of said plurality of programming coils is a core antenna which is able to generate a strong magnetic field along an axis of said core antenna, said core antenna comprising:
a magnetic ferrite core; and
wiring wrapped around said magnetic core a plurality of times.

13. A universal programmer coil for programming tag coils of various configurations in accordance with Claim 12 wherein each of said plurality of programming coils are circular in shape and each successive programming coil has an increasing radius.

14. A universal programmer coil for programming tag coils of various configurations in accordance with Claim 12 wherein each of said plurality of programming coils are polygon in shape and each successive programming coil has an increasing perimeter.

15. A universal programmer coil for programming tag coils of various configurations in accordance with Claim 12 wherein each of said plurality of programing coils are coupled together in series.

16. A universal programmer coil for programming tag coils of various configurations in accordance with Claim 15 further comprising an adjustable capacitor coupled to said plurality of programming coils which are coupled together in series for adjusting said signal which couples said universal programmer coil to said tag coils of various configurations for programming said tag coils of various configurations.

17. A universal programmer coil for programming tag coils of various configurations in accordance with Claim 12 wherein each of said plurality of programming coils are coupled together in parallel.

18. A universal programmer coil for programming tag coils of various configurations in accordance with Claim 17 further comprising an adjustable capacitor wherein said adjustable capacitor is coupled to one of said plurality of programming coils for forming a resonant circuit with said universal programmer coil.

19. A universal programmer coil for programming tag coils of various configurations in accordance with Claim 18 further comprising a switching circuit coupled to said adjustable capacitors for coupling one of said plurality of programming coils to said adjustable capacitors.

20. A universal programmer coil for programming tag coils of various configurations comprising, in combination:
a first programming coil for generating a signal which couples said universal programmer coil to tag coils of a first configuration for programming said tag coils of said first configuration; and
a second programming coil coupled in series to said first programming coil for generating a signal which couples said universal programmer coil to tag coils of a second configuration for programming said tag coils of said second configuration.

21. A universal programmer coil for programming tag coils of various configurations in accordance with Claim 20 wherein said first programming coil is circular in shape.

22. A universal programmer coil for programming tag coils of various configurations in accordance with Claim 20 further comprising a core antenna coupled in series to said first programming coil and which is able to generate a strong magnetic field along an axis of said core antenna.

23. A universal programmer coil for programming tag coils of various configurations in accordance with Claim 22 wherein said core antenna comprises:
a magnetic ferrite core; and
wiring wrapped around said magnetic core a plurality of times.

24. A universal programmer coil for programming tag coils of various configurations in accordance with Claim 20 wherein said second programing coil is polygon in shape.

25. A universal programmer coil for programming tag coils of various configurations in accordance with Claim 20 further comprising an adjustable capacitor coupled in series to said second programming coil for forming a resonant circuit with said universal programmer coil.

26. A universal programmer coil for programming tag coils of various configurations comprising a wiring wound in a spiral configuration having a plurality of turns for generating a signal which couples said universal programmer coil to said tag coils of various configurations for programming said tag coils of various configurations.

27. A universal programmer coil for programming tag coils of various configurations in accordance with Claim 26 further comprising a core antenna which is able to generate a strong magnetic field.

28. A universal programmer coil for programming tag coils of various configurations in accordance with Claim 27 wherein said core antenna comprises a magnetic ferrite core wherein said winding is wound around said magnetic core a plurality of times to generate said strong magnetic field.

29. A universal programmer coil for programming tag coils of various configurations in accordance with Claim 28 further comprising an adjustable capacitor coupled to said winding for adjusting said signal of said universal programmer coil.
